# EUROPEAN PATENT APPLICATION

(11) **EP 3 570 187 A1**
(43) Date of publication of application: **20.11.2019**
(21) Application number: 19167801.0
(22) Date of filing: 08.04.2019
(51) Int. Cl.: G06F 16/74, G06F 3/0484, G06F 3/01

(54) **DISPLAY CONTROL APPARATUS, DISPLAY CONTROL METHOD, AND DISPLAY CONTROL SERVER**

(30) Priority: 14.05.2018 JP 2018093379
(71) Applicant: FUJITSU LIMITED, Kawasaki-shi, Kanagawa 211-8588 (JP)
(72) Inventor: Okuda, Takuma, Kanagawa, 211-8588 (JP)
(74) Representative: Hoffmann Eitle

(57) **Abstract**

A display control apparatus includes a processor configured to perform acquisition of image information related to video information provided from a server to one or more devices for Virtual Reality, display, in accordance with the image information, a screen capable of receiving input of an instruction, and in response to receiving input to the screen, transmit, to the server, instruction information based on the input, wherein the server is configured to control provision of the video information for the one or more devices in accordance with the instruction information.

## Description

### FIELD OF THE INVENTION

The embodiments discussed herein are related to display control techniques.

### BACKGROUND OF THE INVENTION

A method for externally controlling the display of video content using a remote controller is known. For example, a method is known for instructing an icon corresponding to video content divided into predetermined units to play back the video content corresponding to the icon. Also, a method is known for performing control by a display control apparatus by transmitting a control command to a display device and a server that are connected via the Internet.

For example, the related techniques are disclosed in Japanese Laid-open Patent Publication No. 2001-309269 and Japanese Laid-open Patent Publication No. 2004-357186.

### SUMMARY OF THE INVENTION

In the related art, when video content is displayed on a VR (Virtual Reality) device, it is sometimes difficult for an administrator to grasp the display state of the video content from the outside and to perform accurate control. For example, when a user wears a VR device, it is difficult for an administrator to grasp the display state of content. Also, when a user of a VR device is away from an administrator, it is further difficult for the administrator to grasp the display state.

According to an aspect of the embodiments, a display control apparatus includes a processor configured to perform acquisition of image information related to video information provided from a server to one or more devices for Virtual Reality, display, in accordance with the image information, a screen capable of receiving input of an instruction, and in response to receiving input to the screen, transmit, to the server, instruction information based on the input, wherein the server is configured to control provision of the video information for the one or more devices in accordance with the instruction information.

Hence, it is possible for an administrator to grasp the display state of video content on a VR device and to control the VR device.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWINGS

FIG. 1 is a block diagram illustrating an example of the configuration of a display control system according to an embodiment.
FIG. 2 is a block diagram illustrating an example of the configuration of a display control apparatus according to the embodiment.
FIG. 3 is a block diagram illustrating an example of the configuration of a VR device according to the embodiment.
FIG. 4 is a block diagram illustrating an example of the configuration of a display control server according to the embodiment.
FIG. 5 is a diagram illustrating an example of a content table.
FIG. 6 is a diagram illustrating an example of a management table.
FIG. 7 is a diagram illustrating an example of VR content to be output.
FIG. 8 is a diagram for explaining the control performed by the display control apparatus.
FIG. 9 is a sequence chart illustrating an example of the control processing according to the embodiment.
FIG. 10 is a diagram illustrating an example of a computer that executes a display control program.

### DESCRIPTION OF EMBODIMENTS

In the following, a detailed description will be given of a display control program, a display control method, a display control apparatus, and a display control server according to an embodiment of the present disclosure with reference to the drawings. In this regard, the present embodiment will not limit the disclosed techniques. Also, the following embodiments may be suitably combined within a range that does not cause a conflict.

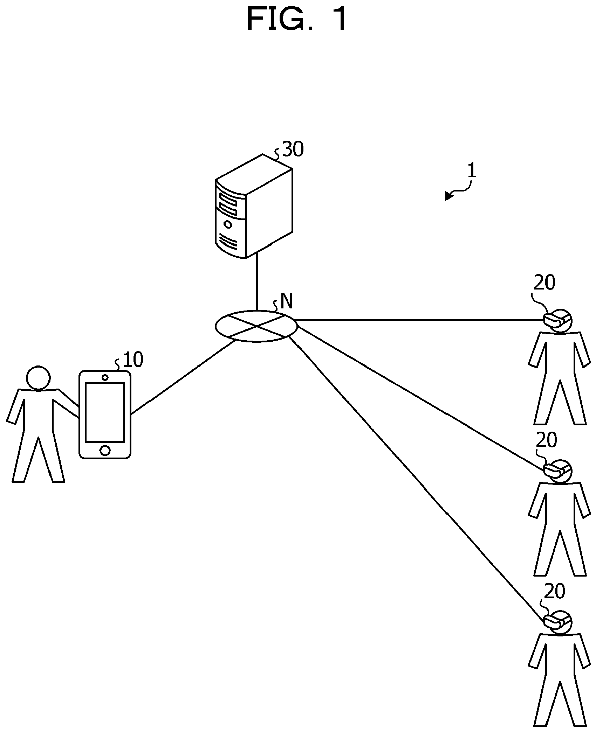

FIG. 1 is a block diagram illustrating an example of the configuration of a display control system according to an embodiment. A display control system 1 illustrated in FIG. 1 includes a display control apparatus 10, a VR device 20, and a display control server 30. In this regard, in the display control system 1, the number of VR devices 20 is not limited, and any number of VR devices 20 may be included. Also, the display control apparatus 10, the VR device 20, and the display control server 30 are communicably connected with each other via a network N.

It is possible to employ for the network N any kinds of communication networks, such as the Internet, a LAN (Local Area Network), a VPN (Virtual Private Network), or the like regardless of whether the network is wired or wireless. Also, the communications via the network N among the display control apparatus 10, the VR device 20, and the display control server 30 may be encrypted by, for example, TLS (Transport Layer Security)/ SSL (Secure Sockets Layer), or the like.

The display control system 1 is a system for controlling the VR devices 20 worn by users. Also, for example, the display control apparatus 10 is a smartphone. Also, in the subsequent description, a user who operates the display control apparatus 10 and controls the VR devices 20 is referred to as an administrator.

The display control apparatus 10 controls one or a plurality of VR devices 20. The display control apparatus 10 is capable of controlling the VR devices 20 via the display control server 30. The display control server 30 is capable of providing the VR devices 20 with VR content. For example, the VR content is image data, or the like. The VR devices 20 may obtain VR content from the display control server 30 at a timing when the user uses the VR content or may obtain VR content and store the VR content at a predetermined timing in advance.

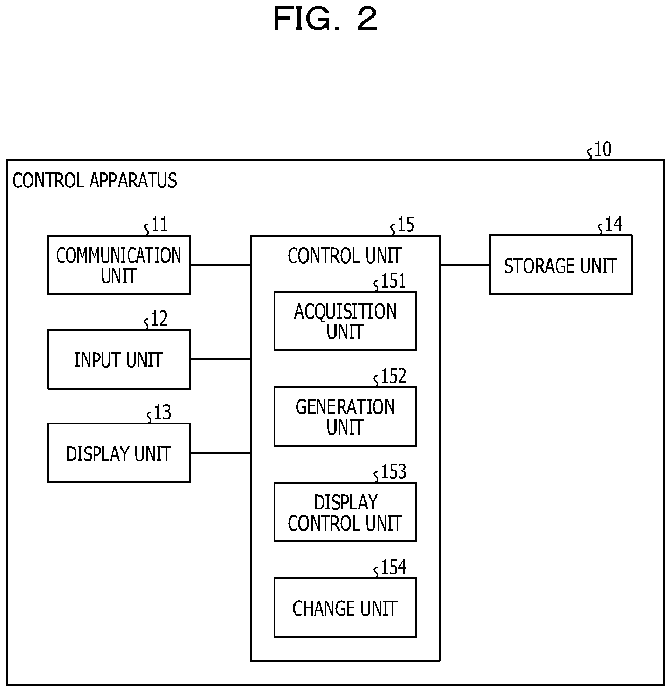

A description will be given of the configuration of the display control apparatus 10. FIG. 2 is a block diagram illustrating an example of the configuration of the display control apparatus according to the embodiment. As illustrated in FIG. 2, the display control apparatus 10 includes a communication unit 11, an input unit 12, a display unit 13, a storage unit 14, and a control unit 15. In this regard, the display control apparatus 10 may include various functional units of a known computer in addition to the functional units illustrated in FIG. 2, for example, functional units, such as various input devices, audio output devices, and the like.

The communication unit 11 is realized by a communication module, for example, a mobile phone line, such as a third generation mobile communication system, LTE (Long Term Evolution), or the like, a wireless LAN, and the like. The communication unit 11 is a communication interface that is connected to the VR devices 20 and the display control server 30 in a wired or wireless manner via the network N and controls communication of information between the VR devices 20 and the display control server 30.

The input unit 12 is an input device for inputting various kinds of information to the display control apparatus 10. The input unit 12 corresponds to a keyboard, a mouse, a touch panel, or the like. The display unit 13 is a display device that displays various kinds of information. The display unit 13 displays information output from the control unit 15. The display unit 13 corresponds to a display device, such as a liquid crystal display, a touch panel, or the like.

The storage unit 14 is realized by a storage device, for example, a semiconductor memory element, such as a RAM (Random Access Memory), a flash memory (Flash Memory), or the like, a storage device, such as a hard disk, an optical disc, or the like. The storage unit 14 stores the information to be used for the processing by the control unit 15.

The control unit 15 is realized by, for example, a CPU (Central Processing Unit), an MPU (Micro Processing Unit), or the like that executes a program stored in an internal storage device using a RAM as a work area. Also, the control unit 15 may be realized by an integrated circuit, for example, an ASIC (Application specific Integrated Circuit), an FPGA (Field Programmable Gate Array), or the like. The control unit 15 includes an acquisition unit 151, a generation unit 152, a display control unit 153, and a change unit 154 and realizes or performs the functions and operations of the information processing described below. In this regard, the internal configuration of the control unit 15 is not limited to the configuration illustrated in FIG. 2 and may be another configuration that performs the information processing described later.

The acquisition unit 151 obtains video information to be output to one or a plurality of VR devices 20 and image information related to the video information. For example, the video information is VR content. Also, for example, the image information is a thumbnail corresponding to the VR content. It is possible for the acquisition unit 151 to obtain the video information and the image information from the display control server 30.

The generation unit 152 generates a thumbnail corresponding to the video information based on the video information. At this time, it is possible for the acquisition unit 151 to obtain a thumbnail generated by the generation unit 152 as the image information instead of obtaining the image information from the display control server 30.

The display control unit 153 controls the display unit 13 and causes the display control server 30 that performs control of the VR device 20 to display image information on a screen capable of receiving input of instruction information. It is possible for the display control unit 153 to selectably display the image information corresponding to each of a plurality of VR devices 20 in a list.

Also, it is possible for the display control unit 153 to display a status indicating the output state of the video information related to the image information to the VR devices 20 and information regarding the output time together with image information. Also, it is possible for the display control unit 153 to display, out of the video information, the image information regarding the video information that has been output and a list of menu regarding the video information being output.

When the change unit 154 receives instruction information to the display control server 30, the change unit 154 transmits the instruction information to the display control server 30 and changes the image information based on the instruction information.

Also, when image information being displayed on the screen is changed, it is possible for the change unit 154 to transmit instruction information to perform control for changing the video information being output to the VR device 20 in synchronism with the change to the display control server 30. When the video information being output to the VR devices 20 is changed, it is possible for the change unit 154 to further change the image information being displayed on the screen based on the change.

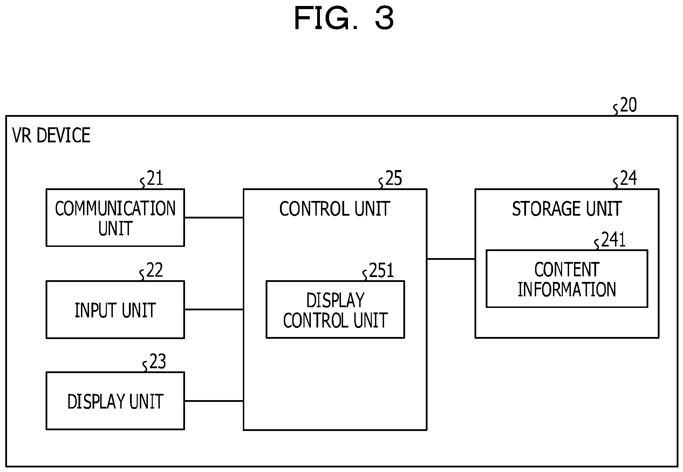

Next, a description will be given of the configuration of the VR device 20. FIG. 3 is a block diagram illustrating an example of the configuration of the VR device according to the embodiment. As illustrated in FIG. 3, the VR device 20 includes a communication unit 21, an input unit 22, a display unit 23, a storage unit 24, and a control unit 25. In this regard, the VR device 20 may include various functional units of a known computer, for example, various input devices, an audio output device, and the like in addition to the functional units illustrated in FIG. 3.

The communication unit 21 is realized by a mobile telephone line, for example, a third generation mobile communication system, an LTE (Long Term Evolution), or the like and a communication module, such as a wireless LAN, or the like. The communication unit 21 is a communication interface that is connected in a wired or wireless manner to the display control apparatus 10 and the display control server 30 via the network N and that controls communication of information between the display control apparatus 10 and the display control server 30.

The input unit 22 is an input device for inputting various kinds of information to the VR device 20. The input unit 22 corresponds to an input device using a gyro sensor, a proximity sensor, or the like. The display unit 23 is a display device that displays various kinds of information. The display unit 23 displays information output from the control unit 25. The display unit 23 corresponds to a display device, such as a head mount display, or the like.

The storage unit 24 is realized by a semiconductor memory element, for example, a RAM, a flash memory, or the like, or a storage device, such as a hard disk, an optical disc, or the like. The storage unit 24 includes content information 241. The content information 241 is data for providing VR content and includes an image, text, and the like.

The control unit 25 is realized by, for example, a CPU, a MPU, or the like executing a program stored in the internal storage device using the RAM as a work area. Also, the control unit 25 may be realized by an integrated circuit, for example, an ASIC, an FPGA, or the like. The control unit 25 includes a display control unit 251 and realizes or performs the functions and the operation of the information processing described in the following. In this regard, the internal configuration of the control unit 25 is not limited to the configuration illustrated in FIG. 2 and may be another configuration as long as the configuration that performs the information processing described later.

The display control unit 251 controls the display unit 23 so as to display VR content. At this time, the display control unit 251 directly or indirectly receives an instruction from the display control apparatus 10 and the display control server 30, and performs processing.

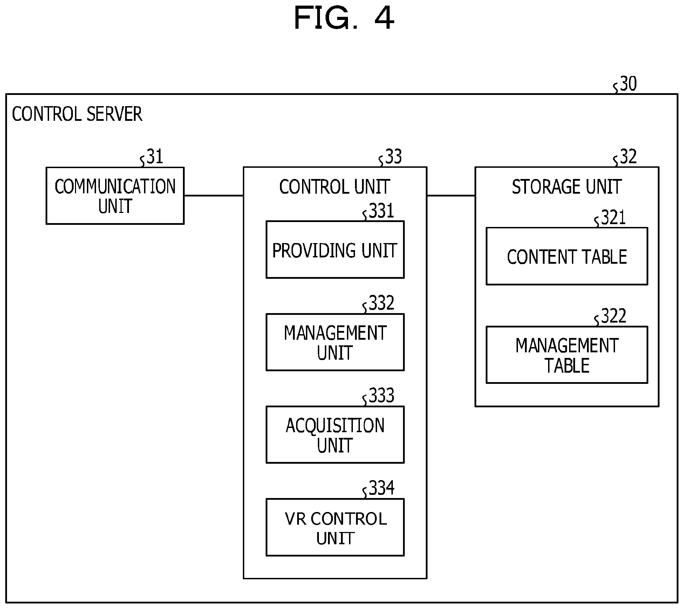

Further, a description will be given of the configuration of the display control server 30. FIG. 4 is a block diagram illustrating an example of the configuration of a display control server according to the embodiment. As illustrated in FIG. 4, the display control server 30 includes a communication unit 31, a storage unit 32, and a control unit 33. In this regard, the display control server 30 may include various functional units of a known computer, for example, functional units of various input devices, an audio output device, and the like in addition to the functional units illustrated in FIG. 4.

The communication unit 31 is realized by, for example, a NIC, or the like. The communication unit 31 is a communication interface that is connected in a wired or wireless manner to the display control apparatus 10 and the VR devices 20 via the network N and that controls communication of information between the display control apparatus 10 and the VR devices 20.

The storage unit 32 is realized by a semiconductor memory element, for example, a RAM, a flash memory, or the like or a storage device, such as a hard disk, an optical disc, or the like. The storage unit 32 includes a content table 321 and a management table 322. Also, the storage unit 32 stores information to be used for the processing by the control unit 33.

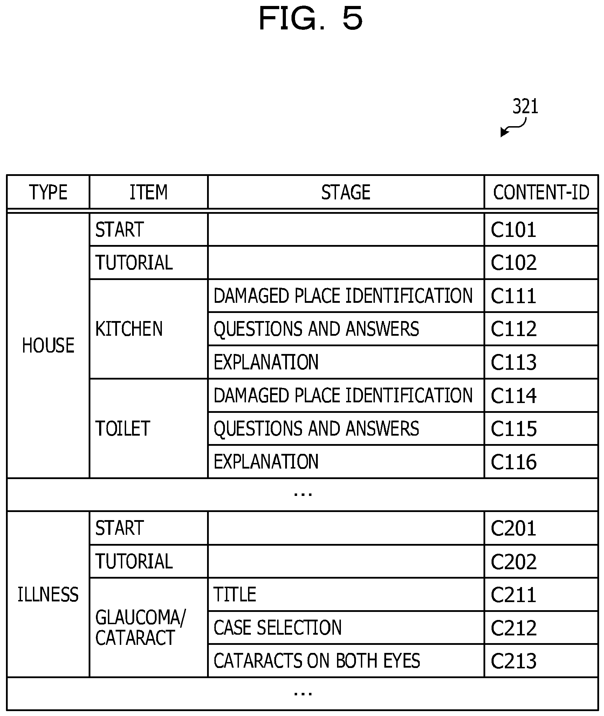

The content table 321 stores information regarding VR content. FIG. 5 is a diagram illustrating an example of a content table. As illustrated in FIG. 5, the content table 321 has items, such as "type", "item", "stage", and "content ID".

Here, each stage of VR content is summarized by a type and an item as an example. In the example in FIG. 5, an item of "kitchen" in a type of "house" includes VR content for each stage, such as "damaged place identification", "questions and answers", and "explanation". Further, a content ID is set for VR content in each stage.

In this regard, the example in FIG. 5 relates to VR content to be used for a business training regarding damage insurance. For example, VR content having a type of "house", an item of "kitchen", and a stage of "damaged place identification" is intended for displaying a video of a kitchen in a house that has suffered damage from a disaster, or the like. Also, for example, VR content having a type of "house", an item of "kitchen", and a stage of "questions and answers" is intended for displaying choices for an answer to the questions and answers regarding the damage of the kitchen of a house, or the like and receiving a selection of an answer.

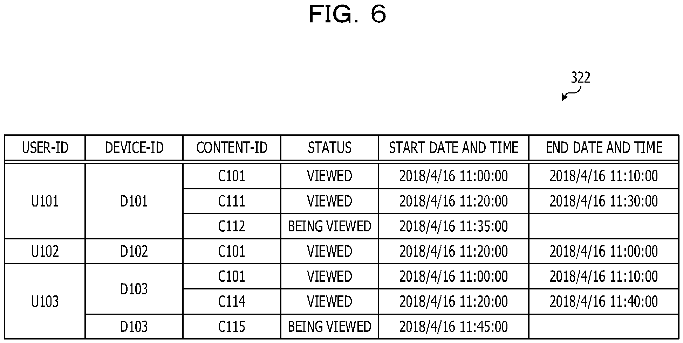

The management table 322 stores information for managing a user and a VR device 20. FIG. 6 is a diagram illustrating an example of a management table. As illustrated in FIG. 6, the management table 322 has items, such as "user ID", "device ID", "content ID", "status", "start date and time", and "end date and time".

For example, the first row in FIG. 6 illustrates that a user "U101" viewed VR content "C101" from "2018/4/16 11:00:00" to "2018/4/16 11:10:00" using a VR device "D101".

Also, for example, the third row in FIG. 6 illustrates that the user "U101" is viewing VR content "C112" from "2018/4/16 11:35:00" using the VR device "D101".

Referring back to the description of FIG. 4, the control unit 33 is realized, for example, by executing a program stored in the internal storage device by a CPU, an MPU, or the like using the RAM as a work area. Also, the control unit 33 may be realized, for example, by an integrated circuit, such as an ASIC, an FPGA, or the like. The control unit 33 includes a providing unit 331, a management unit 332, an acquisition unit 333, and a VR control unit 334 and realizes or performs the functions and operation described in the following. In this regard, the internal configuration of the control unit 33 is not limited to the configuration illustrated in FIG. 4 and may be another configuration as long as it is a configuration for performing the information processing described later.

The providing unit 331 provides the display control apparatus 10 with video information to be output to one or a plurality of VR devices 20. Also, it is possible for the providing unit 331 to provide the VR devices 20 with the video information.

The management unit 332 manages the VR devices 20 and users of the VR devices 20. Specifically, the management unit 332 updates the management table 322 in accordance with the use state of the VR device 20 and the VR content by the users.

The acquisition unit 333 obtains an instruction information input to the screen of the display control apparatus 10 on which the image information related to video information is displayed. The VR control unit 334 performs control on the VR devices based on the instruction information.

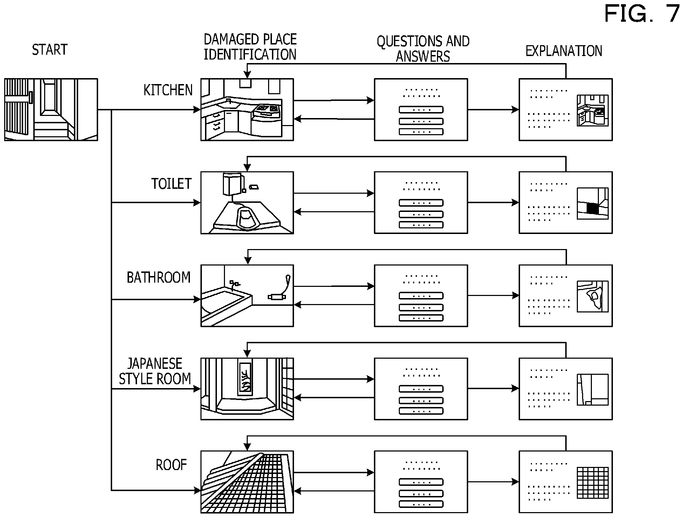

Here, a description will be given of the control of the VR devices 20 by the display control apparatus 10. First, a description will be given of the transition of VR content output to a VR device 20 using FIG. 7. FIG. 7 is a diagram illustrating an example of VR content to be output. In this regard, in the present embodiment, it is assumed that the VR content having a type of "house" is output as an example among the VR content illustrated in FIG. 5.

In this regard, the VR device 20 is capable of displaying a reading screen of the QR code (registered trademark) in addition to the screens explained in FIG. 7. Then the display control apparatus 10 reads the reading screen in advance so as to be tied to one or a plurality of VR devices 20. Specifically, the display control apparatus 10 identifies a VR device 20 using a QR code, and stores the identification information in the management table 322 of the display control server 30.

As illustrated in FIG. 7, first, a start screen is displayed on the VR device 20. Also, if the VR device 20 receives a specific operation while displaying the start screen, the VR device 20 may display a tutorial screen.

Also, the VR device 20 displays, from the start screen, the VR content of "damaged place identification" stage of each item, such as "kitchen", "toilet", "bathroom", "Japanese style room", and "roof". Further, the VR device 20 displays the VR content of the "questions and answers" stage and the "explanation" stage of each item.

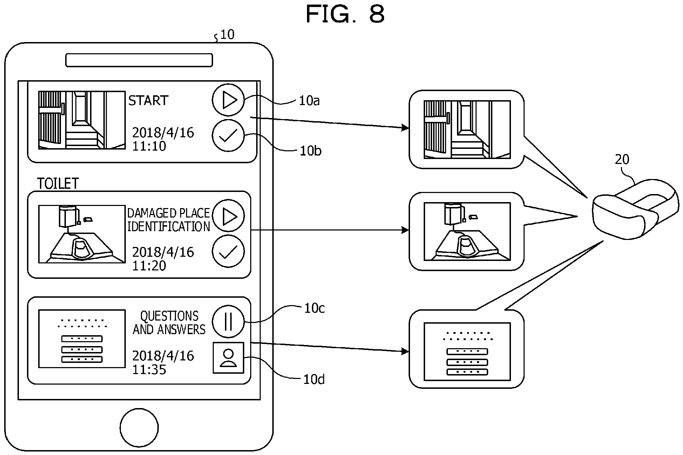

Next, a description will be given of a method of controlling a VR device 20 from the display control apparatus 10 using FIG. 8. FIG. 8 is a diagram for explaining the control performed by the display control apparatus. As illustrated in FIG. 8, a thumbnail corresponding to each VR content is selectably displayed in a list on the display control apparatus 10. Also, the date and time when each VR content was started to be played back is displayed on the display control apparatus 10.

Also, as illustrated in FIG. 8, the display control apparatus 10 displays thumbnails corresponding to the viewed VR content as the information on the screen and is capable of displaying a thumbnail corresponding to not viewed VR content in the lower place of the screen.

A button 10a in FIG. 8 is a button for playing back VR content. When a button 10a displayed on the display control apparatus 10 is pressed, the corresponding VR content is started to be played back on the VR device 20. Also, a button 10c is a button for stopping the VR content being played back. When a button 10c displayed on the display control device 10 is pressed, the VR content being displayed is stopped on the VR device 20.

An icon 10b denotes having been viewed. Also, an icon 10d denotes not yet having been viewed. Also, each icon displayed on the display control apparatus 10 is linked to the status of the management table 322 of the display control server 30.

Also, in the case of VR content in which the choices of questions and answers are displayed, and a user selects an answer, it is possible for administrator to select an answer via the display control apparatus 10 instead of the user. Thereby, it is possible for the administrator to support the user who is inexperienced in the operation.

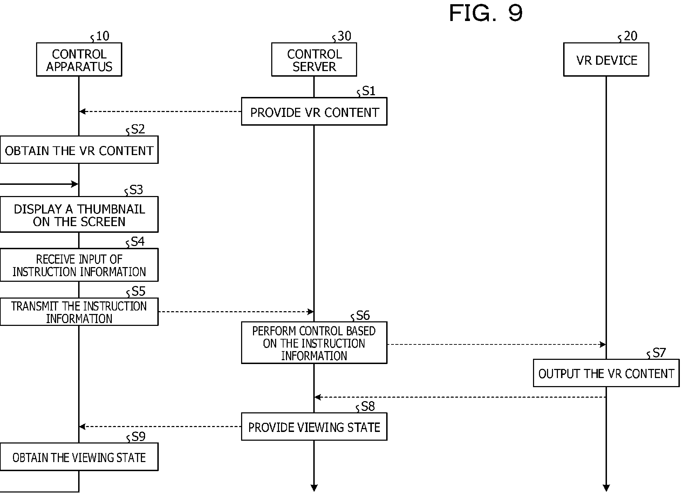

Next, a description will be given of the operation of the display control system 1 according to the embodiment. FIG. 9 is a sequence chart illustrating an example of the control processing according to the embodiment.

As illustrated in FIG. 9, the display control server 30 provides the display control apparatus 10 with VR content (step S1). The display control apparatus 10 obtains the VR content provided from the display control server 30 (step S2). In this regard, the VR content is an example of video information. Also, the display control apparatus 10 may obtain part of the VR content output from the VR device 20. For example, the display control apparatus 10 may obtain a thumbnail for each scene of the VR content output by the VR device 20.

Next, the display control apparatus 10 displays the thumbnail corresponding to the VR content on the screen (step S3). Then the display control apparatus 10 receives instruction information via the screen (step S4) and transmits the received instruction information to the display control server 30 (step S5). For example, the instruction information is information indicating playback and stop.

The display control server 30 controls the VR device 20 based on the instruction information (step S6). Here, the VR device 20 outputs VR content in response to the control of the display control server 30 (step S7). At this time, the display control server 30 provides the display control device 10 with a viewing state of the VR content by the VR device 20 (step S8).

When the display control apparatus 10 obtains the viewing state from the display control server 30 (step S9), the display control apparatus 10 displays a thumbnail on the screen in accordance with the obtained viewing state. Thereby, it is possible for the display control apparatus 10 to change the thumbnail based on the change of the VR content being output by the VR device 20.

Also, the display control apparatus 10 may change the thumbnail in accordance with an elapsed time from the time when an instruction to playback is started. Thereby, it is possible to synchronize the thumbnail with the VR content being output by the VR device 20 without obtaining the viewing state.

In this manner, the display control apparatus 10 obtains video information output to one or a plurality of VR devices 20 and image information related to the video information. Also, the display control apparatus 10 displays the image information on a screen capable of receiving input of instruction information to the display control server 30 that performs control on the VR device 20. Also, when the display control apparatus 10 receives instruction information to the display control server 30, the display control apparatus 10 transmits the instruction information to the display control server 30 and changes the video information based on the instruction information. As a result, it is possible for the administrator to grasp the display state of the video content of the VR device and control the VR device.

For example, it is possible for the display control apparatus 10 to perform control of the content, such as selection of a stage, playback, and stop, and thus perform accurate control to fit an individual user. For example, it is possible for an administrator to play back and stop the training VR content to meet the level of understanding of a user. Also, when a user who is viewing VR content complains of unpleasant feeling, it is possible for the administrator to stop outputting the VR content.

Also, the display control apparatus 10 generates a thumbnail corresponding to video information based on the video information. Also, the display control apparatus 10 obtains the thumbnail as image information. As a result, it is possible for the administrator to intuitively grasp the scene of VR content being viewed.

Also, the display control apparatus 10 selectably displays image information corresponding to each of a plurality of VR devices 20 in a list. As a result, it is possible for the administrator to control the VR devices 20 by intuitive operation.

Also, when image information being displayed on a screen is changed, the display control apparatus 10 transmits instruction information for performing control to change the video information being output to the VR device 20 in synchronism with a change in the display control apparatus 10 to the display control server 30. As a result, it is possible for the administrator to accurately control the VR devices 20.

Also, when the video information being output to the VR device 20 is changed, the display control apparatus 10 changes the image information being displayed on the screen based on the change. As a result, it is possible for the administrator to intuitively grasp the scene of the VR content being viewed.

Also, the display control apparatus 10 causes to display the status indicating the output state of the video information related to the image information to the VR device 20 and information on output time with the image information. As a result, it is possible for the administrator to grasp the viewing time of the VR content.

Also, the display control apparatus 10 causes to display, out of the video information, the image information regarding the output video information and a list of menus regarding the video information being output in order. As a result, it is possible for the administrator to efficiently grasp the viewing state of the VR content.

In this regard, in the above-described embodiment, it is assumed that the display control apparatus 10 controls the device 20 via the display control server 30. However, the present disclosure is not limited to this. For example, the display control apparatus 10 may include each function provided with the display control server 30 and may directly control the VR device 20.

Also, in the above-described embodiment, it is assumed that the VR device 20 stores the content information 241. However, the present disclosure is not limited to this. For example, the VR device 20 may output the VR content provided from the display control apparatus 10 or the display control server 30 in real time.

Each component in each unit illustrated in the diagrams does not have to be physically configured as illustrated in the diagrams. That is to say, the specific form of distribution or integration of each unit is not limited to the configuration illustrated in the diagrams. It is possible to configure all of or a part of the components in a functionally or a physically distributed or integrated manner in any units in accordance with the various loads, the use state, and the like. For example, the acquisition unit 151 and the generation unit 152 of the display control apparatus 10 may be integrated. Also, each processing illustrated in the diagrams is not limited to the order described above, and each processing may be performed at the same time and or the order of the processing may be replaced in the range that does not cause a conflict.

Further, all of or any part of the various processing functions that are performed by each device may be executed on a CPU (or a microcomputer, such as an MPU, an MCU (Micro Controller Unit), or the like). It goes without saying that all of or any part of the various processing functions may be performed by programs that are analyzed and executed by a CPU (or a microcomputer, such as an MPU, an MCU, or the like) or by hardware of wired logic.

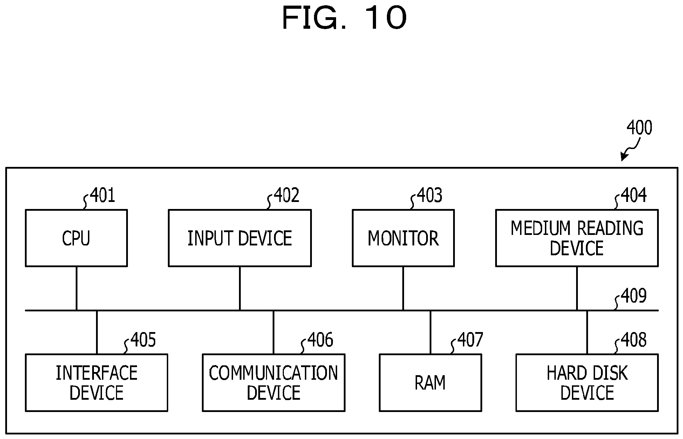

Incidentally, it is possible to realize the various kinds of processing described in each of the above-described embodiments by executing the program including a plurality of instructions provided in advance by a computer. Thus, in the following, a description will be given of an example of a computer that executes the program having the same functions as the above-described embodiments. FIG. 10 is a diagram illustrating an example of a computer that executes a display control program.

As illustrated in FIG. 10, a computer 400 includes a CPU 401 that performs various kinds of operation processing, an input device 402 that receives data input, and a monitor 403. Also, the computer 400 includes a medium reading device 404 that reads a program, and the like from a storage medium, an interface device 405 for connecting various devices, and a communication device 406 for connecting with the other information processing apparatuses, and the like in a wired or a wireless manner. Also, the computer 400 includes a RAM 407 that temporarily stores various kinds of information and a hard disk device 408. Also, each of the devices 401 to 408 is connected to a bus 409.

The hard disk device 408 stores a display control program having the same function as that of each processing unit of the acquisition unit 151, the generation unit 152, the display control unit 153, and the change unit 154 that are illustrated in FIG. 2. Also, the hard disk device 408 stores various kinds of data for realizing the storage unit 14.

The input device 402 receives, for example, input of various kinds of information, such as operation information, and the like from the administrator of the computer 400. The monitor 403 displays various screens, for example, an output screen, and the like to the administrator of the computer 400. The interface device 405 is connected to, for example, a printer, and the like. The communication device 406 has the same function, for example, as that of the communication unit 11 illustrated in FIG. 2, is connected to the network N, the VR device 20, and the display control server 30, and exchanges various kinds of information.

The CPU 401 reads individual programs including a plurality of instructions stored in the hard disk device 408, loads the programs in the RAM 407, and executes the programs so as to perform various kinds of processing. Also, it is possible for these programs to cause the computer 400 to function as the acquisition unit 151, the generation unit 152, the display control unit 153, and the change unit 154 that are illustrated in FIG. 2.

In this regard, the above-described providing programs do not have to be stored in the hard disk device 408. For example, the computer 400 may read the programs stored in a storage medium readable by the computer 400 and execute the programs. The storage medium readable by the computer 400 corresponds to a portable recording medium, for example, a CD-ROM, a DVD (Digital Versatile Disc), a USB (Universal Serial Bus) memory, or the like, a semiconductor memory, such as a flash memory, or the like, a hard disk drive, or the like. Also, the providing programs may be stored in a device connected to a public line, the Internet, a LAN, or the like, and the computer 400 may read the providing programs from these and execute the providing programs.

## Claims

1. A display control apparatus comprising:
a processor configured to
perform acquisition of image information related to video information provided from a server to one or more devices for Virtual Reality,
display, in accordance with the image information, a screen capable of receiving input of an instruction, and
in response to receiving input to the screen, transmit, to the server, instruction information based on the input, wherein the server is configured to control provision of the video information for the one or more devices in accordance with the instruction information.

2. The display control apparatus according to claim 1, wherein
the image information is a thumbnail related to the video information, and
the acquisition includes transmitting a request for generating the thumbnail to the server and receiving the thumbnail from the server.

3. The display control apparatus according to claim 1, wherein
the one or more devices are a plurality of devices, and
the screen includes a list including the image information regarding each device of the plurality of devices in a selectable manner.

4. The display control apparatus according to claim 1, wherein
the processor is configured to, when a change of the image information while the image information is displayed on the screen, transmit, to the server in accordance with the change, an instruction to change the video information provided for the one or more devices.

5. The display control apparatus according to claim 1, wherein
the processor configured to when a change of the video information provided for the one or more devices occurs, change, in accordance with the change, the image information displayed on the screen.

6. The display control apparatus according to claim 1, wherein
the screen includes at least one of information indicating a providing state of the video information for the one or more devices and output time of the video information in association with the image information.

7. The display control apparatus according to claim 1, wherein
the image information includes first image information regarding first video information has been played back by the one or more devices and second image information regarding second video information played back currently by the one or more devices, and
the screen includes displaying a list including the first image information and the second image information.

8. A computer-implemented display control method comprising:
acquiring image information related to video information provided from a server to one or more devices for Virtual Reality;
displaying, in accordance with the image information, a screen capable of receiving input of an instruction; and
in response to receiving input to the screen, transmitting, to the server, instruction information based on the input, wherein the server is configured to control providing the video information for the one or more devices in accordance with the instruction information.

9. The display control method according to claim 8, wherein
the image information is a thumbnail related to the video information, and
the acquiring includes transmitting a request for generating the thumbnail to the server and receiving the thumbnail from the server.

10. The display control method according to claim 8, wherein
the one or more devices are a plurality of devices, and
the screen includes a list including the image information regarding each device of the plurality of devices in a selectable manner.

11. The display control method according to claim 8, further comprising:
when a change of the image information while the image information is displayed on the screen, transmitting, to the server in accordance with the change, an instruction to change the video information provided for the one or more devices.

12. The display control method according to claim 8, further comprising:
when a change of the video information provided for the one or more devices occurs, changing, in accordance with the change, the image information displayed on the screen.

13. The display control method according to claim 8, wherein
the screen includes at least one of information indicating a providing state of the video information for the one or more devices and output time of the video information in association with the image information.

14. The display control method according to claim 8, wherein
the image information includes first image information regarding first video information has been played back by the one or more devices and second image information regarding second video information played back currently by the one or more devices, and
the screen includes displaying a list including the first image information and the second image information.

15. A display control server comprising:
a processor configured to
provide video information for one or more devices for Virtual Rea lity,
transmit, to a control device, image information related to the video information displayed currently on the one or more devices, and
control provision of the video information for one or more devices in accordance with an instruction received from the control device displaying the image information.
